# EUROPÄISCHE PATENTSCHRIFT

(11) **EP 3 268 323 B1**
(45) Veröffentlichungstag und Bekanntmachung des Hinweises auf die Patenterteilung: **09.11.2022**
(21) Anmeldenummer: 16708995.2
(22) Anmeldetag: 07.03.2016
(51) Int. Cl.: C03C 25/47, C03C 25/26, C03C 25/36, C08J 5/08

(54) **FIBERSIZING MIT GERINGEN MENGEN NANOMATERIALIEN**
FIBRE SIZING WITH SMALL AMOUNTS OF NANOMATERIALS
AGENT DE COLLAGE COMPRENANT DE FAIBLES QUANTITÉS DE NANOMATÉRIAUX

(30) Priorität: 10.03.2015 EP 15158363
(43) Veröffentlichungstag der Anmeldung: 17.01.2018
(73) Patentinhaber: Evonik Operations GmbH, 45128 Essen (DE)
(72) Erfinder: SPRENGER, Stephan, 22113 Oststeinbek (DE); NAUMANN, Matthias, 22159 Hamburg (DE)
(74) Vertreter: Evonik Patent Association
(86) Internationale Anmeldenummer: PCT/EP2016/054726
(87) Internationale Veröffentlichungsnummer: WO 2016/142311

(56) Entgegenhaltungen:
- WO-A1-2013/011256
- JP-A- H09 208 268
- US-A- 3 312 569
- US-A1- 2009 092 832
- US-A1- 2013 040 108
- JENSEN ET AL: "Inorganic-organic fiber sizings for enhanced energy absorption in glass fiber-reinforced composites intended for structural applications", COMPOSITES SCIENCE AND TECHNOLOGY, ELSEVIER, UK, Bd. 66, Nr. 3-4, 1. März 2006 (2006-03-01) , Seiten 509-521, XP005197019, ISSN: 0266-3538, DOI: 10.1016/J.COMPSCITECH.2005.06.004
- BIN WEI ET AL: "Strengthening of basalt fibers with nano-SiOepoxy composite coating", MATERIALS AND DESIGN, LONDON, GB, Bd. 32, Nr. 8, 21. April 2011 (2011-04-21) , Seiten 4180-4186, XP028224835, ISSN: 0261-3069, DOI: 10.1016/J.MATDES.2011.04.041 [gefunden am 2011-04-29]
- WEI B ET AL: "Surface modification and characterization of basalt fibers with hybrid sizings", COMPOSITES PART A: APPLIED SCIENCE AND MANUFACTURING, ELSEVIER SCIENCE PUBLISHERS B.V., AMSTERDAM, NL, Bd. 42, Nr. 1, 1. Januar 2011 (2011-01-01) , Seiten 22-29, XP027518260, ISSN: 1359-835X, DOI: 10.1016/J.COMPOSITESA.2010.09.010 [gefunden am 2010-10-01]

## Beschreibung

Mit Nanopartikeln beschichtetes Fasermaterial, deren Beschichtung zwischen 0,01 und weniger als 2,0 Gew.-% Nanopartikel bezogen auf das Trockengewicht des beschichteten Fasermaterials aufweist, wobei die Beschichtung weitere Reaktionen eingehen kann, ein Verfahren zur Herstellung der mit Nanopartikeln beschichteten Fasermaterialien, sowie entsprechende Faserkompositmaterialien.

Leichtbau ist eine der Schlüsseltechnologien zur Bewältigung der Herausforderungen des 21ten Jahrhunderts. Unabdingbar für Leichtbau ist der Einsatz von Faserverbundwerkstoffen. Ihre zunehmende Verwendung im Transportwesen, beispielsweise im Flugzeugbau, im Schienenfahrzeugbau oder im Automobilbau, im Maschinenbau oder im Bauwesen verlangt eine immer höhere Leistungsfähigkeit dieser Faserverbunde. Rotorblättern für Windkraftanlagen werden in zunehmender Länge produziert und unterliegen damit immer höheren Herausforderungen an die mechanische Stabilität.

Faserverbundwerkstoffe, vor allem für Hochleistungsanwendungen, werden häufig unter Verwendung von duromeren oder thermoplastischen Polymermatrices hergestellt. Diese Polymermatrices werden hinsichtlich ihrer Leistungsfähigkeit im Faserverbund optimiert. Auch die verwendeten Verstärkungsfasern, Kurz- oder Endlosfasern, sowie die daraus hergestellten textilen Gebilde, seien es Gewebe, Gewirke, Gelege oder Preforms, werden ebenfalls in Struktur und Auslegung hinsichtlich der Anwendung im Bauteil optimiert.

Das Versagen eines Faserverbundes ist hauptsächlich abhängig von der Grenzfläche Faser/Polymermatrix. Eine gute Anbindung der Faser an die duromere oder thermoplastische Polymermatrix sowie eine gute Faserbenetzung sind unerlässlich.

Grundsätzlich bestehen zwei Möglichkeiten dieses Problem durch Zugabe von Nanomaterialien zu lösen. Zum einen ist es möglich Nanomaterialien in die Polymermatrix einzuarbeiten und dafür relativ große Mengen zu verwenden, zum anderen könnten die Fasern mit Nanomaterialien beschichtet werden.

Dieses Problem wird durch Fibersizing (synonym auch Schlichte) während des Herstellungsprozesses der Faser gelöst. Die Aufgaben des Sizings sind zum einen der Schutz der Faser, d.h. sowohl der Einzelfilamente als auch des Faserbündels (Roving) während der weiteren Verarbeitungsschritte, als auch die spätere Anbindung der Faser an die duroplastische oder thermoplastische Polymermatrix. Auch weitere Fasereigenschaften, wie z.B. antistatisches Verhalten, können auch über das Sizing beeinflusst werden. Die Bestandteile des Sizings sind auf die Faserart, z.B. Glas- oder Kohlefaser, die Faserfeinheit und die vorgesehene spätere Anwendung, z.B. Verarbeitung in Epoxidharzen oder ungesättigten Polyesterharzen, abgestimmt.

WO 2007/074281 offenbart, dass durch eine Beschichtung, die von 2 bis 18 Gew.-% SiO₂-Nanopartikel im Fiber Sizing enthält, die Verarbeitbarkeit der Glasfasern (reduzierter Abrieb) und die Feuchtealterung der Fasern verbessert wurden, hierbei wurden mechanische Daten für Faserverbundwerkstoffe offenbart, die keinen Rückschluss auf den Durchmesser der verwendeten Böhmitpartikel gestatten. Bezogen auf den Feststoffanteil kann aus den Daten berechnet werden, dass die Beschichtung etwa 7,5 Gew.-% Böhmit enthält. Dem einzigen Beispiel, in dem Silikamaterialien offenbart sind (Beispiel 15) muss entnommen werden, dass die Beschichtung 35 Gew.-% Nanomaterial enthält, mechanische Daten von Kompositmaterialien sind nicht offenbart worden.

Sprenger (J Mater Sci, 44 (2009) p342-5) offenbart Faserverbundmaterialien enthaltend Nanopartikel, die gleichmäßig im Polymer verteilt sind. Die mechanischen Eigenschaften werden dadurch auch mit einem Gehalt von 10 Gew.-% an Siliziumdioxidpartikeln in der Matrix nicht wesentlich beeinflusst gegenüber der Verwendung anderer Partikel.

Yang (Mat Letters 61 (2007) p3601-4) offenbart Kohlefasersizing mit SiO₂-Nanopartikeln und die positive Beeinflussung der interlaminaren Scherfestigkeit nach ASTM D-2344, es werden aber keine Mengenangaben offenbart, die einen Rückschluss auf den Partikelgehalt auf den Fasern erlauben. Eine Verbesserung anderer Laminateigenschaften wurde nicht beobachtet.

US 2009/0092832 A1 offenbart Glasfasen, beschichtet mit einer Schlichtezusammensetzung, umfassend (in Gew.-%): 25 bis 90 % mindestens eines Filmbildners, 3 bis 25 % mindestens eines Haftvermittlers und 2 bis 18 % Nanopartikel.

Nachteil des Standes der Technik ist, dass relativ große Mengen an Nanomaterialien aufgewendet werden.

Aufgabe der vorliegenden Erfindung war es, die das Verfahren des Standes der Technik durch Verwendung geringerer Mengen an Nanomaterialien zu vereinfachen.

Überraschenderweise wurde gefunden, dass bereits geringe Mengen Nanomaterialien, die in der Schlichte vorhanden sind, zu ausgezeichneter Verbesserung der mechanischen Eigenschaften der Faserverbundwerkstoffe führen.

Gegenstand der vorliegenden Erfindung ist mit Nanopartikeln beschichtetes Fasermaterial wobei die Beschichtung zwischen 0,01 und weniger als 2,0 Gew.-% Nanopartikel bezogen auf das Trockengewicht des beschichteten Fasermaterials aufweist und wobei die Beschichtung weitere Reaktionen eingehen kann, wobei es sich bei diesen Reaktionen um ringöffnende Polymerisation von Epoxiden handelt, und wobei die Nanopartikel oberflächenmodifizierte sphärische Silika-Nanopartikel sind und einen mittleren Durchmesser von 1 bis 300 nm aufweisen, und wobei die SiO₂-Partikel durch Oberflächenbehandlung hydrophobiert sind.

Die SiO₂ - Partikel sind bevorzugt ausgewählt aus Fällungskieselsäure, kolloidaler Kieselsäure, Diatomeenerde (Kieselgur) und pyrogener Kieselsäure, insbesondere bevorzugt kolloidale Kieselsäure.

Erfindungsgemäß sind die SiO₂-Partikel durch Oberflächenbehandlung hydrophobiert. Besonders bevorzugt sind die oberflächenmodifizierten Partikel, die in EP2067811 (US 2009/0149573) in den Absätzen 60 bis 65 offenbart sind, weiter besonders bevorzugt sind die SiO₂-Nanopartikel mit Alkyl- oder Aryl-alkoxysilanen oberflächenbehandelt.

Bevorzugt ist die Oberflächenbehandlung mit Verbindungen ausgewählt aus Organosiliziumverbindungen wie Trialkylchlorsilan, Dialkyldichlorsilan, Alkylalkoxysilanen, Arylalkoxysilanen, Hexamethyldisilazan, (Meth-)Acryloxypropyltrialkoxysilanen, Aminopropyltrialkoxysilanen, Polydimethylsiloxanen, Polysiloxanen, Si-H-funktionellen Polysiloxanen, Carbonsäuren, Chelatbildnern und Fluoropolymeren sowie deren Mischungen durchgeführt Erfindungsgemäß sind die Nanopartikel sphärisch geformt.

Die Nanopartikel weisen einen mittleren Durchmesser von 1 bis 300 nm, bevorzugt von 1 bis 200 nm, mehr bevorzugt von 2 bis 150 nm, weiter mehr bevorzugt von 3 bis 100 nm und insbesondere bevorzugt von 5 bis 50 nm auf.

Die Durchmesser der Nanopartikel vor Aufbringen auf die Faser werden bevorzugt mittels DLS (dynamic light scattering) bestimmt. Die Mittelwerte sind gemäß DLS mittlere Äquivalentdurchmesser. Die Durchmesser der Nanopartikel auf der Faser werden mittels elektronenmikroskopischer Aufnahmen bestimmt. Die Mittelwerte sind dann arithmetischer Art.

Insbesondere bevorzugt sind SiO₂-Nanopartikel mit einem Durchmesser von 5 bis 50 nm, deren Oberfläche hydrophob modifiziert wurden, insbesondere mit Alkylalkoxysilanen und/oder Arylalkoxysilanen hydrophobiert wurden.

Fasermaterialien sind bevorzugt Einzelfilamente, Faserbündel enthaltend Einzelfilamente, Fäden enthaltend Einzelfilamente oder Faserbündel. Weiterhin bevorzugt sine die Fasermaterialien Produkte wie Gelege und Gewebe enthaltend Einzelfilamente, Faserbündel oder Fäden. Besonders bevorzugt sind Gelege enthaltend Faserbündel. Im Falle von Geweben sind diese bevorzugt Leinenwebart. Bevorzugte Gelege sind aufgebaut aus Schichten, wobei die Schichten in gleicher Richtung ausgerichtet sein können (uniaxial) oder in unterschiedlichen Richtungen ausgerichtet sein können (multiaxial). Vorteil von Gelegen ist, dass die Fasern oder Faserbündel der Schichten nicht durch den Flechtvorgang gebogen sind. Damit steht eine höhere Kraftaufnahmekapazität zur Verfügung.

Die Fasermaterialien sind bevorzugt Glasfaser-, Mineralfaser-, Naturfasern und/oder Polymerfasermaterialien, mehr bevorzugt Glasfasermaterialien.

Insbesondere bevorzugt sind die Fasermaterialien Gelege aus Glasfasern, weiter insbesondere bevorzugt sind die Fasermaterialien Gelege aus Glasfaserbündeln.

Die Fasermaterialien sind bevorzugt fabrizierte Rohprodukte, als gereinigte Materialien oder bereits beschichtet, bevorzugt werden gereinigte Fasermaterialien verwendet. Die Reinigung erfolgt bevorzugt materialabhängig, ein bevorzugtes Reinigungsverfahren ist eine thermische Behandlung, besonders bevorzugt eine Bestrahlung mit Hilfe eines IR-Strahlers. Gegebenenfalls kann die thermische Behandlung unter Schutzgas erfolgen.

Ein bevorzugter IR-Strahler weist eine Länge von 1 m auf. Das Fasermaterial wird in einer Entfernung von 5 mm bis 10 cm, bevorzugt 1cm bis 3 cm am IR-Strahler vorbeigeführt. Die Bestrahlung führt zur Zersetzung von Verbindungen, die sich auf der Oberfläche des Fasermaterials befinden. Der Vorgang wird so optimiert, dass auch nach erneuter Bestrahlung unter gleichen Bedingungen die Masse eines Probestückes oder mehrere identischer Probestücke um nicht mehr als 1 % des Messwertes abweicht.

Das erfindungsgemäße beschichtete Fasermaterial wird bevorzugt in Form von Einzelfilamenten, Faserbündeln, Geweben oder Gelegen mit den Nanomaterialien beschichtet, mehr bevorzugt werden Faserbündel mit den Nanomaterialien beschichtet.

Bevorzugt weisen die erfindungsgemäßen Fasermaterialen 0,05 bis 1,6 Gew.-%, besonders bevorzugt 0,1 bis 1,2 Gew.-%, insbesondere bevorzugt 0,2 bis 1,0 Gew.-% bezogen auf das Trockengewicht der beschichteten Faser an Nanonmaterialien auf.

Insbesondere bevorzugt sind die erfindungsgemäßen mit Nanopartikeln beschichteten Fasermaterialien solche Faserbündel, die mit Alkylalkoxysilanen und/oder Arylalkoxysilanen oberflächenbehandelten sphärischen SiO₂-Nanopartikeln in einem Epoxidharz beschichtet wurden, wobei die beschichteten Faserbündel zwischen 0,1 und 1,2 Gew.-% Nanopartikel bezogen auf das Trockengewicht der beschichteten Faserbündel aufweist, und wobei die Beschichtung weitere Reaktionen eingehen kann.

Die weiteren Reaktionen der Beschichtung des Fasermaterials sind Reaktionen, die es ermöglichen, mit einer Polymermatrix im Sinne von Vernetzungsreaktionen chemische Bindungen einzugehen. Die Polymermatrix und die erfindungsgemäßen mit Nanopartikeln beschichteten Fasermaterialien können einen Faserverbundwerkstoff bilden, bei dem die Beschichtung der Fasermaterialien an der Oberfläche der Beschichtung mit der Polymermatrix reagieren kann.

Erfindungsgemäß handelt es sich bei diesen Reaktionen um ringöffnende Polymerisation von Epoxiden.

Ein weiterer Gegenstand ist Verfahren zur Herstellung von mit Nanopartikeln beschichtetem Fasermaterial, deren Beschichtung zwischen 0,01 und weniger als 2,0 Gew.-% Nanopartikel bezogen auf das Trockengewicht des beschichteten Fasermaterials aufweist und wobei das Fasermaterial durch Tauchen, Sprühen oder mit Hilfe eines Bades mit einer wässrigen Emulsion enthaltend einen Nanopartikel-haltigen Filmbildner in Kontakt gebracht wird, und wobei das beschichtete Fasermaterial nachfolgend getrocknet wird, wobei die wässrige Emulsion oberflächenmodifizierte sphärische Silika-Nanopartikel enthält, und die Nanopartikel einen mittleren Durchmesser von 1 bis 300 nm aufweisen, und wobei die SiO₂-Partikel durch Oberflächenbehandlung hydrophobiert sind.

Bevorzugt ist das erfindungsgemäße Verfahren zur Herstellung von mit Nanopartikeln beschichtetes Fasermaterial, deren Beschichtung zwischen 0,01 und weniger als 2,0 Gew.-% Nanopartikel bezogen auf das Trockengewicht des beschichteten Fasermaterials aufweist, wobei das Fasermaterial mit einem Bad in Kontakt gebracht wird, wobei das Bad eine wässrige Emulsion eines Nanopartikel-haltigen Filmbildners enthält und wobei das beschichtete Fasermaterial nachfolgend getrocknet wird.

Bevorzugt wird das Fasermaterial nicht direkt in das Bad getaucht sondern mittels einer rotierenden Auftragswalze der Nanopartikel-haltige Filmbildner auf das Fasermaterial aufgetragen. Bevorzugt taucht die Auftragswalze mit der Unterseite in das Bad ein, nimmt bei der Rotation eine gewisse Menge Filmbildner als Film auf, und auf der Oberseite der Walze wird das Fasermaterial mit dem Nanopartikel-haltigen Filmbildner in Kontakt gebracht. Dabei ist die Auftragsmenge auf das Fasermaterial abhängig von den Stoffeigenschaften der wässrigen Emulsion des Nanopartikel-haltigen Filmbildners, wie bevorzugt der Viskosität, und von der Rotationsgeschwindigkeit der Walze, von dem Durchmesser der Walze und von der Oberflächenbeschaffenheit der Walze. Die Geschwindigkeiten der Walze und des Fasermaterials sind bevorzugt so aufeinander abgestimmt, dass keine Gleitreibung auftritt.

Der Filmbildner ist bevorzugt ein reaktives, vernetzbares Monomer oder Oligomer, insbesondere bevorzugt ein Epoxidharz.

Mehr bevorzugt ist das Verfahren zur Herstellung von mit Nanopartikeln beschichtetem Fasermaterial, deren Beschichtung zwischen 0,01 und weniger als 2,0 Gew.-% Nanopartikel bezogen auf das Trockengewicht des beschichteten Fasermaterials aufweist und wobei das Fasermaterial durch Tauchen, Sprühen oder mit Hilfe eines Bades mit einer wässrigen Emulsion enthaltend einen Nanopartikel-haltigen Filmbildner in Kontakt gebracht wird, und wobei das beschichtete Fasermaterial nachfolgend getrocknet wird, wobei die wässrige Emulsion oberflächenmodifizierte sphärische Silika-Nanopartikel enthält, wobei der Filmbildner ein Epoxidharz ist.

Bevorzugt enthält die wässrige Emulsion des Nanopartikel-haltigen Filmbildners weitere Komponenten, bevorzugt ausgewählt aus Viskositätsregulatoren, bevorzugt sind Carboxymethylzellusose und Hydroxyethylzellulose, Netzmittel und Dispergieradditive, und Emulgatoren.

Der Festkörpergehalt der wässrigen Emulsion berechnet sich aus der Summe aller Komponenten abzüglich des Wassers.

Bevorzugt enthält die wässrige Emulsion 1 bis 50 Gew.-% Nanopartikel bezogen auf den Feststoffgehalt der Emulsion, bevorzugt 5 bis 30 und insbesondere bevorzugt 10 bis 20 Gew.-%.

Besonders bevorzugt ist das Verfahren zur Herstellung von mit Nanopartikeln beschichtetem Fasermaterial, deren Beschichtung zwischen 0,01 und weniger als 2,0 Gew.-% Nanopartikel bezogen auf das Trockengewicht des beschichteten Fasermaterials aufweist und wobei das Fasermaterial durch Tauchen, Sprühen oder mit Hilfe eines Bades mit einer wässrigen Emulsion enthaltend einen Nanopartikel-haltigen Filmbildner in Kontakt gebracht wird, und wobei das beschichtete Fasermaterial nachfolgend getrocknet wird, wobei die wässrige Emulsion oberflächenmodifizierte sphärische Silika-Nanopartikel enthält, wobei der Filmbildner ein Epoxidharz ist, wobei die wässrige Emulsion 10 bis 20 Gew.-% Nanopartikel bezogen auf den Feststoffgehalt der Emulsion enthält.

Bevorzugt wird die Trocknung im erfindungsgemäßen Verfahren bei Temperaturen oberhalb der Raumtemperatur, bevorzugt von 30 bis 95°C, mehr bevorzugt von 35 bis 90°C, weiter bevorzugt von 40 bis 85°C, weiter mehr bevorzugt von 45 bis 80°C, besonders bevorzugt von 50 bis 75°C und insbesondere bevorzugt von 55 bis 70°C durchgeführt.

Bevorzugt wird die Trocknung innerhalb von 0,5 bis 10 Minuten, bevorzugt innerhalb von 1 bis 3 Minuten durchgeführt.

Bevorzugt wird die Trocknung mit Heißluft im Gegenstrom durchgeführt.

Insbesondere wird die Trocknung im erfindungsgemäßen Verfahren bei Temperaturen von 55 bis 70°C mit Heißluft im Gegenstrom innerhalb von 1 bis 3 min durchgeführt.

Der Beschichtungsvorgang und die Trocknung des erfindungsgemäßen Verfahrens können wiederholt durchgeführt werden.

Zur Bestimmung des Nanopartikelgehaltes wird zum Abschluss des erfindungsgemäßen Verfahrens das Fasermaterial bevorzugt bis zur Gewichtskonstanz getrocknet. Diese Trocknung wird bevorzugt bei 55 bis 70°C durchgeführt, das Material wird nach Abkühlung auf Raumtemperatur gewogen und der Vorgang der Trocknung und Wägung wird solange wiederholt, bis mindestens zwei aufeinander folgende Wägungen eine Abweichung von weniger als 0,5% des Messwertes aufweisen.

Ein weiterer Gegenstand ist die Verwendung der erfindungsgemäßen mit Nanopartikeln beschichteten Fasermaterialien und/oder der erfindungsgemäßen Verfahrensprodukte zur Herstellung von Faserverbundwerkstoffen.

Ein weiterer Gegenstand sind Faserverbundwerkstoffe enthaltend das erfindungsgemäße mit Nanopartikeln beschichtete Fasermaterial und/oder das erfindungsgemäße Verfahrensprodukt in einer Polymermatrix.

Bevorzugt ist die Polymermatrix ein Duromer, bevorzugt Epoxydharz, ein Vinylesterharz oder ein ungesättigtes Polyesterharz, besonders bevorzugt ein Epoxydharz.

Ein Vorteil der erfindungsgemäßen mit Nanopartikeln beschichteten Fasermaterialien ist, dass der Zusatz von Nanopartikeln zum Fiber Sizing nicht nur die Fasereigenschaften verbessert, sondern überrschenderweise darüber hinaus auch die Eigenschaften von daraus hergestellten Faserverbundwerkstoffen. Insbesondere werden die Bruchzähigkeit und das Ermüdungsverhalten bei zyklischer Beanspruchung verbessert. Gemäß dem Stand der Technik werden derartige Verbesserungen nur als Folge der Modifizierung der gesamten Harzmatrix mit Nanopartikeln gefunden.

Ein weiterer Vorteil ist, dass eine außerordentlich geringe Menge von Nanomaterialen in der Beschichtung von Fasermaterialien bereits den gewünschten Effekt hervorruft und eine Steigerung der Masse an Nanomaterialien keine weitere Verbesserung der mechanischen Eigenschaften daraus hergestellter Faserverbundwerkstoffe bewirkt.

Ein weiterer Vorteil ist, dass Faserverbundwerkstoffe enthaltend Fasermaterial mit einem über den von der vorliegenden Erfindung beanspruchten Bereich hinausgehenden Masse an Nanomaterialien schlechtere Eigenschaften aufweist, als die erfindungsgemäßen Faserverbundwerkstoffe.

Die Beispiele belegen, dass bereits 0,4 Gew.-% SiO₂-Nanopartikel bezogen auf die trockene Fasermasse die Bruchzähigkeit des Faserverbundwerkstoffes mehr als verdoppeln.

Besonders wichtig für ein Laminat ist das Ermüdungsverhalten. Dies wird mittels eines zyklischen Dreipunktbiegeversuches untersucht. Dabei wird eine Platte des Faserverbundwerkstoffs zyklisch belastet und die zurückgegebene Energie gemessen. Daraus berechnet sich die im Laminat dissipierte Energie, welche zu Laminatschädigungen und schließlich zum Bruch führt. Je höher die dissipierte Energie, desto weniger Zyklen übersteht ein Laminat, d.h. desto kürzer ist seine Lebensdauer.

Die Beispiele zeigen, dass die dissipierte Energie bei Verwendung der erfindungsgemäßen mit Nanopartikeln beschichteten Fasermaterialien in Faserverbundwerkstoffen schon bei sehr geringen Massenanteilen deutlich erniedrig ist. Weiterhin zeigen die Beispiele, dass eine Steigerung des Nanomaterialanteils keine oder nur eine geringfügige Verbesserung dieser Eigenschaft bewirkt. Oberhalb eines gewissen Masseanteils wird sogar eine Verschlechterung beobachtet.

Die Beschichtung von Fasermaterialien mit derartig geringen Mengen an Nanomaterialien stellt eine Verbesserung gegenüber dem Stand der Technik dar und vereinfacht das Beschichtungsverfahren.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

### Beispiele

### Materialien:

Nanopox^{®} F 400 (Warenzeichen der Evonik Hanse GmbH, Deutschland) enthält zu 40 Gew.-% SiO₂-Partikel mit einer Durchmesser von 20 nm (Zahlenmittel) und wurde zunächst wässrig emulgiert. Diese Emulsion wurde anschließend auf die in den Beispielen angegebenen Werte verdünnt.

Neoxil 965 (DSM Composite Resins) wurde immer in Form einer 4 Gew.-% Emulsion in Wasser bezogen auf die Gesamtemulsion eingesetzt.

### Entschlichtung der Fasermaterialien:

In einem Abstand von 2 cm wird ein Faserbündel an einem IR-Strahler vorbeigeführt. Die Geschwindigkeit wurde so optimiert, dass das ursprüngliche Sizing vollständig entfernt wird. Dies wurde über den Masseverlust bestimmt.

### Allgemeines Beschichtungsverfahren:

Auf das Fasermaterial wird mittels einer rotierenden Auftragswalze der Filmbildner aufgetragen. Die Auftragswalze taucht mit der Unterseite in das Sizingbad ein, nimmt bei der Rotation eine gewisse Menge Filmbildner auf und auf der Oberseite der Walze wird das Fasermaterial mit dem Filmbildner in Kontakt gebracht. Die Geschwindigkeit der Walze und des Fasermaterials sind so aufeinander abgestimmt, dass keine Differenzgeschwindigkeit auftritt.

### Beispiel 1, Sizing auf entschlichteten Glasfasern:

Das Glasfasermaterial StarRov^{®}086 (Warenzeichen der Johns Manvill, USA), Variante PR 220 1200 086 wurde durch IR-Bestrahlung entschlichtet und nach Abkühlen auf Raumtemperatur gewogen. Direkt nachfolgend wurden die Faserbündel beschichtet. Das Tauchbad enthielt eine wässrige Emulsion von Epoxydharzfilmbildnern und gegebenenfalls SiO₂-Nanopartikel. Nach dem Tauchen wurden die Fasern bei 60°C bis zur Gewichtskonstanz getrocknet. Danach wurde durch Differenzwägung die Menge des aufgebrachten Sizings nachgeprüft.

Die Sizings wurden jeweils in einer Masse von 1,8 Gew.-% (bezogen auf die Massensumme der Fasern nach der Reinigung + aufgetragener Beschichtung) aufgetragen. Es wurden drei Sizings als untersucht.

Die Tauchbäder waren folgendermaßen zusammengesetzt:
1. Ausschließlich Neoxil 965
2. Mischung von 50 Gew.-% Neoxil 965 und 50 Gew.-% Nanopox F 400 (als 2 Gew.-% SiO₂ wässrige Emulsion)
3. Mischung von 50 Gew.-% Neoxil 965 und 50 Gew.-% Nanopox F 400 (als 5 Gew.-% SiO₂ wässrige Emulsion).

Nach dem Konstantwiegen berechnen sich damit die Beschichtungen zu:
System 1: mit 1,8 Gew.-% Neoxil 965, nicht erfindungsgemäß
System 2: mit 1,2 Gew.-% Neoxil 965 und 0,6 Gew.-% Nanopox F 400, entsprechend 0,24 Gew.-% SiO₂
System 3: mit 0,8 Gew.-% Neoxil 965 und 1 Gew.-% Nanopox F 400, entsprechend 0,4 Gew.-% SiO₂

Mit den beschichteten Fasermaterialien wurden jetzt Probekörper als UD-Materialien gewickelt. Diese wurden anschließend mit dem Epoxidharz/härter-Gemisch getränkt und gemäß den Angaben des Herstellers ausgehärtet. Zum Einsatz kam das Epoxidharz Infusion Resin MGS^{®}RIM 135 (Warenzeichen der Hexion, Deutschland) in Kombination mit dem Härter RIMH 137 (Hexion) verwendet. Als Imprägnierverfahren wurde VARI (Vacuum Assisted Resin Infusion) gewählt. Die so hergestellten Laminate wurden auf ihre mechanischen Eigenschaften geprüft.

Die Ergebnisse sind in Tabelle 1 zusammengefasst, es wurden jeweils 5 Probekörper vermessen, angegeben sind die arithmetischen Mittelwerte:
Die Bruchzähigkeit wurde nach DIN EN ISO 15024:2001 mit folgenden Parametern gemessen: 65 mm "delamination strength".

Die Querzugfestigkeit wurde nach DIN EN ISO 527-5:2008 bestimmt.

Die dissipierte Energie wurde nach DIN EN ISO 13003:2003 im Dreipunktbiegeversuch nach 3000 Zyklen bestimmt.

**Tabelle 1: Mechanische Eigenschaften der Laminate gemäß Beispiel 1**

| Test | System 1 | System 2 | System 3 |
|---|---|---|---|
| Querzugfestigkeit | 16 MPa | 22 MPa | 16 MPa |
| Bruchzähigkeit G_{lc} | 419 J/m² | 550 J/m² | n.b. |
| Dissipierte Energie | 4 Nmm | 2,5 Nmm | 2,4 Nmm |

Die Querzugfestigkeit wird für System 2, mit einem Nanopartikelgehalt von 0,24 Gew.-% auf der Faser (entsprechend 0,6 Gew% Nanopox F 400), deutlich verbessert. Auch die Bruchzähigkeit des Laminates wird bei System 2 um über 30 % auf 550 J/m² verbessert.

Die Daten der dissipierten Energie belegen, dass die Anwesenheit von Nanopartikeln auf der Faser zu einer deutlichen Verbesserung des Ermüdungsverhaltens führt.

### Beispiel 2, Sizing auf Glasfasern mit einem kommerziellen Sizing als Untergrund:

Ein industielles Biaxialgelege mit einem Flächengewicht von 807 g/m² und einer +45/-45° Orientierung (Saertex) wurde verwendet. Dabei handelt es sich um das Galsfasermateriel Hybon^{®} 2001/2 600 tex (Warenzeichen der PPG Fiber Glass, USA), welche mit einem unbekannten Epoxidsizing ohne Nanomaterialien ausgerüstet waren.

Durch wiederholtes Eintauchen in eine wässrige Emulsion von Nanopox F 400 und anschließendes Trocknen bei 60°C wie in Beispiel 1 beschrieben wurden zwei modifizierte Gelege mit unterschiedlichem Auftrag hergestellt. Das Gelege, wie geliefert (System A, Vergleich), mit zusätzlichen 1,5 Gew.-% (entsprechend 0,6 Gew.-% SiO₂, System B) Nanopox bezogen auf Gewebegewicht sowie mit zusätzlichen 4 Gew% Nanopox (entsprechend 1,6 Gew.-% SiO₂, System C) wurden dann zu einem Faserverbundwerkstoff verarbeitet. Dazu wurde ein Lagenaufbau ([+45/-45/0/90/-45/+45/90/0])s mittels VARI (Vacuum Assisted Resin Infusion) zu 5 mm dicken Platten verarbeitet. Als Harz/Härter-System wurden Epikote RIMR 135 und Epikure RIMH 137 wie in Beispiel 1 verwendet.

Die interlaminare Scherfestigkeit (ILSS), bestimmt nach ASTM-D 2344, aller drei Laminate war nahezu identisch mit 47 MPa für System A (Kontrolle), 45 MPa für System B und 49 MPa für System C. Auffallend verbessert sich Bruchzähigkeit der Laminate, bestimmt gemäß ASTM- D 5528, wie in Tabelle 2 gezeigt.

**Tabelle 2: Mechanische Eigenschaften der Laminate gemäß Beispiel 2**

| Test | System A | System B | System C |
|---|---|---|---|
| Bruchzähigkeit G_{lc} | 950 J/m² | 1780 J/m² | 1920 J/m² |

Ein Zusatz von 0,6 Gew% SiO₂-Nanopartikel auf dem Gewebe verbessert die Bruchzähigkeit um 86 %. Ein Zusatz von 1,6 Gew% Nanopartikel erbringt sogar eine Verbesserung um 102 %.

## Patentansprüche

1. Mit Nanopartikeln beschichtetes Fasermaterial, wobei die Beschichtung zwischen 0,01 und weniger als 2,0 Gew.-% Nanopartikel bezogen auf das Trockengewicht des beschichteten Fasermaterials aufweist und wobei die Beschichtung weitere Reaktionen eingehen kann, wobei es sich bei diesen Reaktionen um ringöffnende Polymerisation von Epoxiden handelt, und wobei die Nanopartikel oberflächenmodifizierte sphärische Silika-Nanopartikel sind und einen mittleren Durchmesser von 1 bis 300 nm aufweisen, und wobei die SiO₂-Partikel durch Oberflächenbehandlung hydrophobiert sind.

2. Fasermaterial nach Anspruch 1 **dadurch gekennzeichnet, dass** das Fasermaterial Glasfasermaterial ist.

3. Fasermaterial nach einem der Ansprüche 1 bis 2 **dadurch gekennzeichnet, dass** die Beschichtung vernetzbare Epoxydgruppen enthält.

4. Fasermaterial nach einem der Ansprüche 1 bis 3 **dadurch gekennzeichnet, dass** die Beschichtung ein Epoxydharz enthält.

5. Verfahren zur Herstellung von mit Nanopartikeln beschichtetem Fasermaterial, wobei die Beschichtung zwischen 0,01 und weniger als 2,0 Gew.-% Nanopartikel bezogen auf das Trockengewicht des beschichteten Fasermaterials aufweist und wobei das Fasermaterial durch Tauchen, Sprühen oder mit Hilfe eines Bades mit einer wässrigen Emulsion enthaltend einen Nanopartikel-haltigen Filmbildner in Kontakt gebracht wird, und wobei das beschichtete Fasermaterial nachfolgend getrocknet wird, wobei die wässrige Emulsion oberflächenmodifizierte sphärische Silika-Nanopartikel enthält und die Nanopartikel einen mittleren Durchmesser von 1 bis 300 nm aufweisen, und wobei die SiO₂-Partikel durch Oberflächenbehandlung hydrophobiert sind.

6. Verfahren nach Anspruch 5 **dadurch gekennzeichnet, dass** das Fasermaterial nicht direkt in das Bad getaucht, sondern mittels einer rotierenden Auftragswalze der Nanopartikel-haltige Filmbildner auf das Fasermaterial aufgetragen wird.

7. Verfahren nach einem der Ansprüche 5 oder 6 **dadurch gekennzeichnet, dass** die wässrige Emulsion 1 bis 50 Gew.-% Nanopartikel bezogen auf den Feststoffgehalt der Emulsion enthält.

8. Verwendung des mit Nanopartikeln beschichteten Fasermaterials nach einem der Ansprüche 1 bis 4 und/oder der Produkte des Verfahrens nach einem der Ansprüche 5 bis 7 zur Herstellung von Faserverbundwerkstoffen.

9. Faserverbundwerkstoff enthaltend das mit Nanopartikeln beschichtete Fasermaterial nach einem der Ansprüche 1 bis 4 und/oder der Produkte des Verfahrens nach einem der Ansprüche 5 bis 8 in einer Polymermatrix.

10. Faserverbundwerkstoff nach Anspruch 9 **dadurch gekennzeichnet, dass** die Polymermatrix ein Duromer ist.

11. Faserverbundwerkstoff nach einem der Ansprüche 9 oder 10 **dadurch gekennzeichnet, dass** das Duromer ein Epoydharz ist.

## Claims

1. Nanoparticle-coated fibre material, the coating of which includes between 0.01 and less than 2.0 wt% of nanoparticles based on the dry weight of the coated fibre material and is capable of undergoing further reactions, wherein these reactions comprise ring-opening polymerization of epoxides, and wherein the nanoparticles are surface-modified spherical silica nanoparticles and have an average diameter of 1 to 300 nm, and wherein the SiO₂ particles have a surface treatment to render them hydrophobic.

2. Fibre material according to Claim 1, **characterized in that** the fibre material is glass fibre material.

3. Fibre material according to either of Claims 1 and 2, **characterized in that** the coating contains crosslinkable epoxy groups.

4. Fibre material according to any of Claims 1 to 3, **characterized in that** the coating contains an epoxy resin.

5. Process for producing nanoparticle-coated fibre material, the coating of which includes between 0.01 and less than 2.0 wt% of nanoparticles based on the dry weight of the coated fibre material and wherein the fibre material is contacted with an aqueous emulsion containing a nanoparticle-containing film-former by dipping, spraying or using a bath, and wherein the coated fibre material is subsequently dried, wherein the aqueous emulsion contains surface-modified spherical silica nanoparticles and the nanoparticles have an average diameter of 1 to 300 nm, and wherein the SiO₂ particles have a surface treatment to render them hydrophobic.

6. Process according to Claim 5, **characterized in that** the fibre material is not directly dipped into the bath, instead a rotating applicator roll applies the nanoparticle-containing film-former atop the fibre material.

7. Process according to either of Claims 5 and 6, **characterized in that** the aqueous emulsion contains from 1 to 50 wt% of nanoparticles based on the solids content of the emulsion.

8. Use of the nanoparticle-coated fibre material according to any of Claims 1 to 4 and/or of the process products according to any of Claims 5 to 7 in the manufacture of fibre composite materials.

9. Fibre composite material containing the nanoparticle-coated fibre material according to any of Claims 1 to 4 and/or the process products according to any of Claims 5 to 8 in a polymer matrix.

10. Fibre composite material according to Claim 9, **characterized in that** the polymer matrix is a thermoset.

11. Fibre composite material according to either of Claims 9 and 10, **characterized in that** the thermoset is an epoxy resin.

## Revendications

1. Matériau fibreux revêtu par des nanoparticules, le revêtement présentant entre 0,01 et moins de 2,0 % en poids de nanoparticules par rapport au poids sec du matériau fibreux revêtu et le revêtement pouvant être engagé dans d'autres réactions, ces réactions étant une polymérisation d'époxydes par ouverture de cycle, et les nanoparticules étant des nanoparticules de silice sphérique modifiée en surface et présentant un diamètre moyen de 1 à 300 nm, et les particules de SiO₂ étant hydrophobisées par traitement de surface.

2. Matériau fibreux selon la revendication 1, **caractérisé en ce que** le matériau fibreux est un matériau de fibre de verre.

3. Matériau fibreux selon l'une quelconque des revendications 1 et 2, **caractérisé en ce que** le revêtement contient des groupes époxyde réticulables.

4. Matériau fibreux selon l'une quelconque des revendications 1 à 3, **caractérisé en ce que** le revêtement contient une résine époxy.

5. Procédé pour la préparation de matériau fibreux revêtu par des nanoparticules, le revêtement présentant entre 0,01 et moins de 2,0 % en poids de nanoparticules par rapport au poids sec du matériau fibreux revêtu et le matériau fibreux étant mis en contact avec une émulsion aqueuse contenant un agent filmogène contenant des nanoparticules par trempage, pulvérisation ou à l'aide d'un bain, et le matériau fibreux revêtu étant ensuite séché, l'émulsion aqueuse contenant des nanoparticules de silice sphérique modifiée en surface et les nanoparticules présentant un diamètre moyen de 1 à 300 nm, et les particules de SiO₂ étant hydrophobisées par traitement de surface.

6. Procédé selon la revendication 5, **caractérisé en ce que** le matériau fibreux n'est pas trempé directement dans le bain, mais l'agent filmogène contenant des nanoparticules étant plutôt appliqué sur le matériau fibreux au moyen d'un rouleau d'application rotatif.

7. Procédé selon l'une quelconque des revendications 5 et 6, **caractérisé en ce que** l'émulsion aqueuse contient 1 à 50 % en poids de particules par rapport à la teneur en solides de l'émulsion.

8. Utilisation du matériau fibreux revêtu par des nanoparticules selon l'une quelconque des revendications 1 à 4 et/ou des produits du procédé selon l'une quelconque des revendications 5 à 7 pour la préparation de matériaux composites fibreux.

9. Matériau composite fibreux contenant le matériau fibreux revêtu par des nanoparticules selon l'une quelconque des revendications 1 à 4 et/ou les produits du procédé selon l'une quelconque des revendications 5 à 8 dans une matrice polymérique.

10. Matériau composite fibreux selon la revendication 9, **caractérisé en ce que** la matrice polymérique est un duromère.

11. Matériau composite fibreux selon l'une quelconque des revendications 9 et 10, **caractérisé en ce que** le duromère est une résine époxy.
